# FASCICULE DE BREVET EUROPEEN

(11) **EP 2 637 977 B1**
(45) Date de publication et mention de la délivrance du brevet: **18.01.2017**
(21) Numéro de dépôt: 11778909.9
(22) Date de dépôt: 07.11.2011
(51) Int. Cl.: C03B 5/235, F23D 17/00

(54) **FOUR DE FUSION DU VERRE COMPRENANT DES BRULEURS REFROIDIS**
GLASSCHMELZOFEN MIT GEKÜHLTEN BRENNERN
GLASS MELTING FURNACE COMPRISING COOLED BURNERS

(30) Priorité: 08.11.2010 BE 201000657
(43) Date de publication de la demande: 18.09.2013
(73) Titulaire: AGC Glass Europe, 1348 Louvain-la-Neuve (BE)
(72) Inventeur: BIRIS, Gregory, B-5190 Moustier (BE); CONTINO, Antonella, B-6040 Jumet (BE); DESENFANS, Cedric, B-6040 Jumet (BE); TOON, Claes, B-6040 Jumet (BE)
(74) Mandataire: Le Vaguerèse, Sylvain Jacques
(86) Numéro de dépôt international: PCT/EP2011/069493
(87) Numéro de publication internationale: WO 2012/062686

(56) Documents cités:
- WO-A1-2010/000709
- WO-A1-2010/083410
- JP-A- 2001 165 414
- US-A- 2 331 989
- US-A- 2 412 579
- US-A- 2 994 519
- US-A- 3 174 527
- US-A- 3 515 529

## Description

La présente invention concerne les fours de fusion du verre dans lesquels les matières premières sont déversées sur un bain de verre en fusion, la température dans le four pour la fusion des matières premières étant assurée par le transfert radiatif à partir des flammes engendrées par des brûleurs.

Dans les grands fours de fusion du verre la disposition est de façon traditionnelle d'enfourner les matières premières à une extrémité d'un four allongé, et de récupérer le verre fondu et affiné à l'autre extrémité. Pour assurer la fusion puis l'affinage des brûleurs sont disposés le long du bassin suivant une distribution fonction de l'énergie nécessaire aux différents stades de la progression dans le four. Le maximum d'énergie est requis en amont pour permettre la fusion des matières premières, l'affinage ne nécessitant que le maintien d'une température convenable.

Pour des raisons économiques les fours de fusion sont traditionnellement de grande capacité. Les productions peuvent atteindre des valeurs de l'ordre de 1000 tonnes par jour de verre. De telles quantités nécessitent des apports énergétiques considérables lesquels entrent pour une part importante dans le coût de production. Tous les facteurs susceptibles de minimiser les coûts énergétiques sont considérés avec soin. Dans ce sens le choix du combustible est un élément important compte tenu des fluctuations des cours de ces produits.

Différentes configurations sont utilisées pour les fours en question. Elles ont pour objectif de tirer le meilleur parti de l'énergie développée par la combustion. Ces structures dépendent de multiples facteurs, dans lesquels figurent notamment les dimensions du four, la nature des brûleurs, le contrôle des fumées etc.

Pour la majorité des fours actuels la combustion est opérée avec un combustible liquide ou gazeux et de l'air ou éventuellement de l'air enrichi en oxygène. L'invention concerne ces types de mise en oeuvre.

Dans tous les cas, l'économie de la fusion impose la récupération d'une partie au moins de l'énergie entraînée avec les fumées provenant de la combustion. Les fours fonctionnant avec de l'air comme comburant comportent des régénérateurs constitués de tours garnies d'éléments réfractaires qui sont mis au contact des fumées. Ces réfractaires absorbent une partie de l'énergie des fumées. La chaleur emmagasinée sert au réchauffage ultérieur de l'air utilisé dans la combustion.

Le mode habituel est de disposer de part et d'autre du four des brûleurs et des régénérateurs. Les flammes sont développées d'un côté du four avec l'air préchauffé par passage sur des régénérateurs situés du même côté. Les fumées générées par la combustion sont dirigées sur les régénérateur situés sur le coté du four opposé à celui où se situent les brûleurs actifs. Les brûleurs situés de part et d'autre du four sont activés alternativement sur des périodes de l'ordre d'une vingtaine de minutes.

Dans les fours en question le flux d'air chaud en provenance d'un régénérateur est conduit par des gaines d'admission débouchant dans le four par des ouvertures pratiquées dans les parois réfractaires (les "ports necks"). La position des brûleurs par rapport à ces ouvertures est soit en dessous de celles-ci (brûleurs "under port") soit dans ces ouvertures (brûleurs "through port"). Le brevet US 2,994,519 décrit un four verrier à régénérateurs comprenant des brûleurs positionnés dans les ouvertures des gaines d'admission. La structure et les conditions de fonctionnement de ces deux types de brûleurs peuvent différer sensiblement. En particulier leur position respective les expose à des conditions thermiques plus ou moins sévères. Ainsi, la position dans l'ouverture d'admission de l'air chaud, dont la température est de l'ordre de 1250°C peut entraîner une altération des matériaux constitutifs des brûleurs, altération d'autant plus sensible que le brûleur est plongé dans ce flux gazeux.

Le brevet US 2,412,579 propose des brûleurs combinant combustible liquide et gazeux pour des fours d'aciérie fonctionnant de manière alternée avec régénérateurs. Les dispositions proposées pour ces brûleurs ont pour but d'éviter l'encrassement des buses d'injection localisées dans les parois du four sans pénétrer dans les flux gazeux.

De la même manière le choix de la position des brûleurs, par les conditions thermiques auxquelles ils sont exposés, influe sur la mise en oeuvre des combustibles. Les combustibles liquides sont particulièrement sensibles. Au-delà d'une température de l'ordre de 150°C, ils sont susceptibles de subir des craquages qui peuvent conduire notamment à l'obstruction des injecteurs. Le craquage des combustibles gazeux n'intervient ordinairement qu'à des températures sensiblement plus élevées, de l'ordre de 450°C.

Toujours pour ce qui concerne les combustibles liquides, habituellement des fuels lourds, la température est aussi un élément déterminant de leur viscosité laquelle intervient dans les modes d'injection. Dans la pratique les fuels lourds sont portés à une température voisine de 80 à 120°C de manière à leur donner une fluidité suffisante pour faciliter leur pulvérisation.

Le choix des combustibles s'établit principalement entre les combustibles liquides (fuel lourd notamment) et les combustibles gazeux, tels le gaz naturel. Indépendamment des prix de chacun de ces combustibles, d'autres facteurs liés à leur mise en oeuvre interviennent dans ce choix. Leur combustion ne s'effectue pas dans les mêmes conditions, et les produits de combustion diffèrent suffisamment pour introduire des considérations supplémentaires. Ainsi les flammes développées à partir de combustible liquide contiennent des particules de suie à partir desquelles le rayonnement peut conduire à un transfert énergétique facilité. L'utilisation du combustible liquide conduit aussi ordinairement à des flammes plus courtes qui améliorent le temps de séjour des produits de combustion dans le four et par suite un transfert plus complet de l'énergie développée.

Le gaz naturel peut présenter l'avantage éventuel de coûts inférieurs à ceux des combustibles liquides. Les flammes ne développent pratiquement pas de composés soufrés et la dépollution des fumées en est facilitée. Par ailleurs les produits de combustion sont plus riches en vapeur d'eau. La teneur en vapeur d'eau de l'atmosphère dans le four peut influer sur le comportement du bain en fusion. En particulier l'accroissement de la teneur en vapeur d'eau est souvent la cause de formation de mousse à la surface du bain, mousse qui s'oppose à la pénétration du rayonnement dans le bain et ralentit le transfert d'énergie.

Les choix entre combustible liquide ou combustible gazeux ne sont pas exclusifs les uns des autres. D'une part ces choix comme indiqués peuvent évoluer par exemple en fonction des variations de prix, mais d'autre part, à l'intérieur d'un même four, il peut être avantageux de disposer de brûleurs des deux sortes de combustibles pour tirer le meilleur parti en tout point du four des caractéristiques spécifiques à chacun de ces combustibles. Mais plus encore que la mise en oeuvre simultanée de brûleurs correspondant à chacun des deux types de combustibles, il est avantageux de disposer de brûleurs qui puissent fonctionner alternativement ou simultanément avec les deux types en question.

Des brûleurs "bi-combustible" ont été proposés antérieurement. La structure et le mode de fonctionnement de ces brûleurs sont principalement commandés par les soucis de maîtriser la combustion de telle sorte que celle-ci génère le moins possible d'oxydes d'azote, oxydes dont le rejet est très rigoureusement réglementé. Un mode de ce type figure par exemple dans la publication FR 2 834 774. Ce document propose un brûleur dont la structure conduit à la pulvérisation de gouttelettes de combustible liquide sous forme d'un jet "creux" supposé améliorer les conditions de combustion. L'injection du combustible liquide est obtenue au moyen d'un fluide gazeux de pulvérisation sous forte pression entourant le combustible liquide et animé d'un mouvement de rotation. Aucune disposition n'est décrite en ce qui concerne le maintien des conditions de température du brûleur.

La publication JP 2001165414 décrit un four de fusion du verre à régénérateurs comprenant des brûleurs through port bi-combustibles refroidis. Le combustible gazeux est injecté par des injecteurs situés autour d'un injecteur central de combustible liquide. Pour maîtriser les conditions de mise en oeuvre, quelle que soit la configuration des fours et quelles que soient les proportions de combustibles gazeux et liquide, l'invention propose d'utiliser des brûleurs bi-combustibles dans un four de fusion du verre tel que celui faisant l'objet de la revendication 1.

Les brûleurs selon l'invention réunissent les alimentations en combustible gazeux et liquide sur le même dispositif. Les alimentations sont indépendantes l'une de l'autre. Autrement dit il est possible de faire fonctionner le brûleur en mode combustible liquide exclusif, en mode combustible gazeux exclusif, ou encore en mode mixte combinant les deux premiers dans des proportions diverses.

Les conditions de fonctionnement du brûleur selon l'invention, en particulier les conditions de température, sont contrôlées par l'utilisation d'un système de refroidissement intégré au brûleur. La présence de combustible liquide, comme indiqué précédemment impose que ce combustible soit d'une part suffisamment fluide, et par suite chauffé à une température supérieure à la température ambiante, mais d'autre part que cette température n'atteigne un niveau auquel ces combustibles seraient dégradés par craquage. Etant donné les températures auxquelles sont exposés les brûleurs un refroidissement est nécessaire quel que soit l'emplacement du brûleur dans le four, pour maintenir le combustible liquide dans les conditions adéquates.

Le système de refroidissement est aussi destiné à protéger le brûleur lui-même. L'alliage métallique dont le brûleur est constitué est susceptible d'être attaqué aux températures présentes dans le four. L'exposition à l'air chaud alimentant la combustion, et plus encore l'exposition aux gaz de combustion dont la température dépasse les 1550°C, peuvent altérer le fonctionnement des brûleurs. C'est en particulier le cas des brûleurs disposés dans les gaines d'admission d'air chaud qui sont aussi celles d'évacuation des fumées vers les régénérateurs. Pour cette raison, les brûleurs "through ports" sont rétractables. Lorsque le brûleur est inactif et que les gaz de combustion passent dans la gaine menant au régénérateur dans les alternances rappelées plus haut, le brûleur est rétracté et mis en attente de l'alternance suivante.

Dans la pratique il est avantageux de dissocier au moins en partie la température des parois externes du brûleur et celle des combustibles dans ce brûleur. Le refroidissement des parois ne doit pas conduire à un abaissement excessif de la température des combustibles, et notamment du combustible liquide. Pour maintenir autant que possible ce dernier dans le domaine de température approprié, domaine qui est relativement limité, il est avantageux selon l'invention de faire en sorte que la température du combustible liquide soit peu influencée lors de son passage dans le brûleur. Une isolation limitée de la canalisation d'alimentation du combustible liquide est avantageusement ménagée dans le brûleur. Cette isolation est avantageusement réalisée par un ensemble de double canalisation. Le conduit d'alimentation est enveloppé dans une canalisation concentrique qui isole cette alimentation du reste du brûleur soumis au refroidissement indiqué ci-dessus.

Pour les dispositions "through port" du brûleur, celui-ci étant exposé au courant d'air chauffé dans le régénérateur, il est souhaitable que ce brûleur offre un profil limitant au maximum les turbulences. Par ailleurs pour encore minimiser les turbulences auprès des injecteurs de combustible, il est avantageux de les disposer dans des logements en retrait par rapport à la paroi externe du brûleur. Cette disposition a encore pour avantage de protéger les buses d'injection du flux d'air chaud.

Les injecteurs sont évidemment dirigés de manière que les flux de combustibles se développent globalement dans le sens de circulation de l'air chaud. Ils sont aussi disposés ou inclinés de telle sorte que la flamme se développe pratiquement parallèlement au bain de verre en fusion.

Le combustible liquide est avantageusement pulvérisé sans utiliser de fluide de pulvérisation. La projection du combustible est obtenue par l'effet de la seule pression et le réglage des buses. Ceci permet notamment d'écourter la flamme correspondant à l'usage de ce combustible. En plus, l'atmosphère à proximité de l'injecteur n'est pas perturbée par le gaz de pulvérisation.

Lorsque le brûleur doit pouvoir fonctionner en mode mixte, il est préférable de faire en sorte que les flux de combustibles liquide et gazeux ne se perturbent pas l'un l'autre. Pour cette raison ces flux sont émis dans des directions voisines et sensiblement parallèles ou légèrement convergentes pour constituer un mélange dans lequel les deux combustibles participent à la formation d'une flamme unique.

Les masses en mouvement des deux combustibles peuvent différer sensiblement. Dans ce cas si la proportion de combustible liquide est relativement faible les gouttelettes pulvérisées peuvent pénétrer difficilement dans le flux de combustible gazeux, et être maintenues à la périphérie. Pour obtenir un mélange satisfaisant il est avantageux, selon l'invention, de constituer l'injection du combustible gazeux de telle sorte que les gouttelettes pulvérisées soient en partie au moins prises dans ce flux gazeux. Pour obtenir cette introduction l'invention prévoit de former le flux gazeux à partir d'au moins deux buses d'injection situées de part et d'autre du flux des gouttelettes. Les deux flux gazeux sont avantageusement convergents de sorte que leur fusion conduit aussi les gouttelettes prises entre ces deux flux à un brassage important dispersant les gouttelettes dans ces flux.

Le nombre de points d'injection du combustible gazeux n'est limité que par l'encombrement et la complexité du brûleur. Pour obtenir les effets recherchés deux injections gazeuses convenablement réglées suffisent à un mélange satisfaisant.

Le cas échéant il peut être souhaitable pour améliorer le transfert énergétique de la flamme au verre, de favoriser un étalement de la flamme dans un plan parallèle à la surface du verre fondu. De manière limitée une telle disposition est obtenue par exemple en utilisant des buses d'injection de combustible gazeux dont l'ouverture n'est pas circulaire mais de forme oblongue, la plus grande dimension de leur section s'étendant dans un plan parallèle à celui du bain fondu. Cette formation d'un flux aplani est aussi éventuellement favorisée par la convergence des flux de combustibles gazeux particulièrement lorsque ceux-ci présentent des quantités de mouvement du même ordre de grandeur.

L'invention est décrite de manière détaillée dans la suite en faisant référence aux planches de dessin dans lesquelles :
- la figure 1 présente en perspective partiellement "écorchée" les principaux éléments d'un four de fusion du verre ;
- la figure 2 montre en perspective une tranche de four comportant un brûleur "through port" ;
- la figure 3 est analogue à la figure 2, le brûleur étant en position rétractée ;
- la figure 4 présente en perspective, un agrandissement du brûleur présenté aux figures 2 et 3 ;
- la figure 5 est une coupe longitudinale détaillée du brûleur de la figure 4;
- la figure 6 est une coupe transversale du brûleur au niveau des alimentations et évacuation de l'eau de refroidissement;
- la figure 7 est une vue en perspective d'une bague d'injection de combustible gazeux.

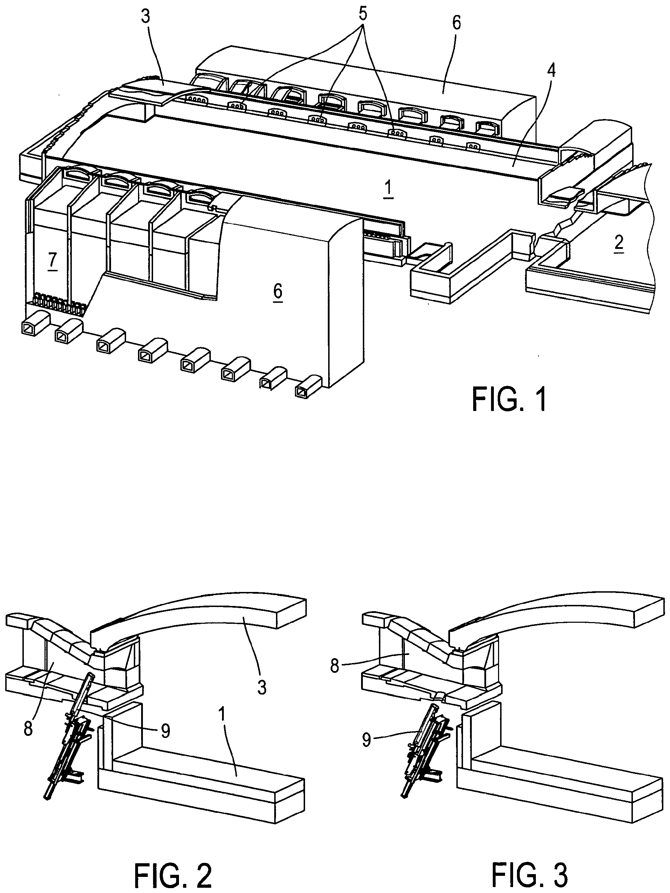

Le four présenté à la figure 1 est composé des éléments principaux suivants : un bassin 1 en matériau réfractaire dans lequel les matières premières sont déversées à l'extrémité gauche. Le bassin représenté vide, en fonctionnement est rempli de verre fondu. Le verre s'écoule de gauche à droite et communique avec un bassin d'affinage 2.

Le bassin fait partie d'un ensemble clos, la partie supérieure formant une voûte dont seule une petite partie 3 est représentée. Les parois latérales 4 présentent des ouvertures 5 en communication avec des régénérateurs garnis de matériaux réfractaires 7.

Le four est construit de façon symétrique par rapport à son axe longitudinal. Les ouvertures d'une paroi font face à des ouvertures identiques de l'autre paroi, chaque ouverture communiquant avec un régénérateur.

Selon l'invention représentée aux figures 2 et 3, un brûleur 9 est disposé dans les gaines d'admission 8 reliant les régénérateurs aux ouvertures 5.

La figure 3 présente le brûleur 9 dans la position active, autrement dit lorsqu'il génère une flamme qui va se développer à la surface du bain de verre en direction de l'ouverture symétrique disposée sur la paroi opposée.

La flamme non représentée, est alimentée en combustible par le brûleur 9, et en air préchauffé par passage sur les réfractaires 7 du régénérateur 6 associé. Les produits de combustion sont évacués par l'ouverture 5 située sur la paroi opposée, et de là passent dans le régénérateur correspondant.

La disposition des injecteurs dans les gaines d'admission de l'air chaud permet de développer la flamme au plus près de la paroi, par opposition aux modes dans lesquels les brûleurs sont disposés sous les ouvertures 5 ("under port"). Toute la largeur du four est en conséquence disponible pour le développement de la flamme. Ceci est utile lorsque les fours ne sont pas très larges, ou encore lorsque les brûleurs sont essentiellement alimentés en combustible gazeux. Les flammes dans ce cas sont sensiblement plus longues pour une même capacité énergétique. Pour ne pas réduire le transfert thermique il est bien évidemment souhaitable que les flammes ne s'étendent pas d'une paroi à l'autre, ce qui aurait pour conséquence d'envoyer un surcroît d'énergie dans le régénérateur, avec pour inconvénient supplémentaire une attaque accrue des réfractaires.

La figure 3 présente le brûleur 9 en position rétractée. Cette position est celle qui est adoptée dans l'alternance de fonctionnement des brûleurs lorsque la gaine d'admission conduit les fumées vers le régénérateur 6.

Les températures des fumées sont de l'ordre de 1550°C, donc très supérieures à celles de l'air réchauffé servant à la combustion lesquelles se situent aux environ de 1250°C. Il est donc particulièrement souhaitable de prévenir les dégradations que pourrait occasionner la présence du brûleur dans ce flux à haute température. La rétraction du brûleur dans la position de la figure 3 permet de protéger le brûleur contre de telles dégradations. Par ailleurs le maintien du brûleur dans le courant de fumées nécessiterait un refroidissement plus intense un abaissement correspondant de la température des fumées, et par suite une perte d'une part d'énergie récupérée dans les régénérateurs.

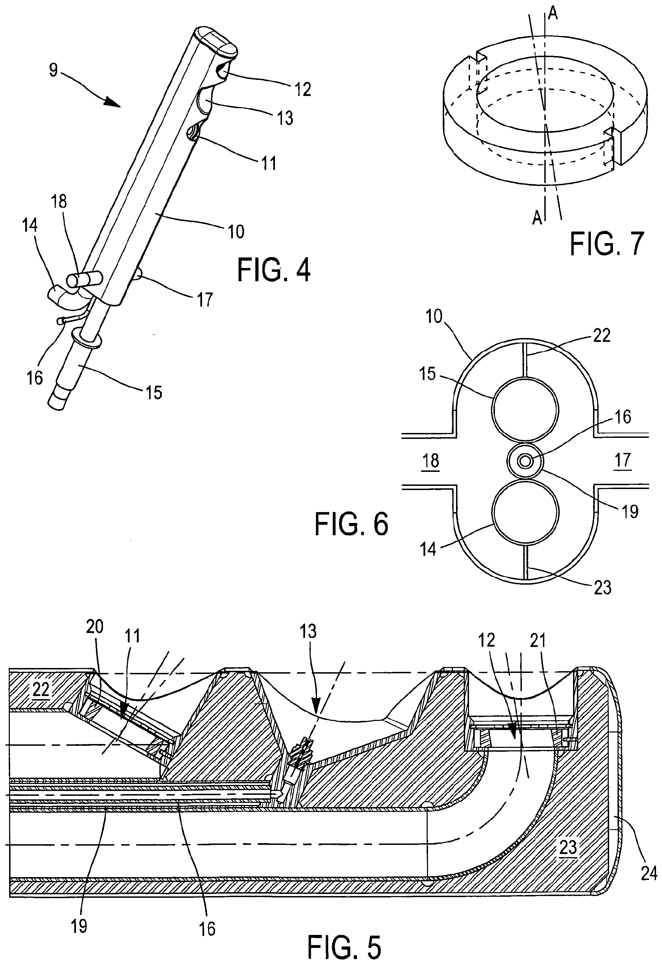

La figure 4 montre la structure générale d'un brûleur selon l'invention. L'ensemble des alimentations en combustible est rassemblé dans une enveloppe 10 unique qui est refroidie par une circulation d'eau.

Le brûleur présenté comporte deux injecteurs 11, 12 destinés au combustible gazeux. Un troisième injecteur 13 est utilisé pour le combustible liquide.

Le brûleur se prolonge à l'extérieur de la paroi réfractaire constituant la gaine d'alimentation 8 et est raccordé aux canalisations 14, 15 d'alimentation en combustible gazeux et 16 en combustible liquide, et amenée et sortie d'eau de refroidissement 17 et 18.

Un injecteur de combustible liquide 13 est présenté dans le modèle illustré. Il est bien évidemment possible d'associer sur un même brûleur plusieurs injecteurs distincts.

Dans le brûleur selon l'invention le combustible liquide est avantageusement pulvérisé sous forte pression sans l'intervention d'un fluide de pulvérisation.

Dans la forme présentée l'alimentation de l'injecteur de combustible liquide 13 est assurée par la canalisation 16 située au centre du brûleur. La canalisation 16 est concentrique à une canalisation 19. Une certaine distance est maintenue entre les canalisations 16 et 19 pour minimiser les transferts thermiques avec le reste du brûleur et en particulier pour éviter le contact de la canalisation 16 d'alimentation en combustible liquide chaud avec le liquide de refroidissement circulant dans le brûleur.

Le choix de disposer l'alimentation en combustible gazeux en deux injecteurs distincts 11 et 12, a pour but de permettre une orientation contrôlée de la flamme. La direction générale est donnée par le flux d'air chaud circulant dans la gaine d'alimentation 8, mais la cinétique propre du combustible gazeux permet un ajustement de cette direction. Pour donner une certaine latitude dans cet ajustement, il est avantageux comme représenté, de donner aux injecteurs deux orientations distinctes de telle sorte qu'elles soient convergentes. La direction d'injection et le réglage indépendant des débits gazeux permettent de moduler l'orientation de la flamme.

La circulation des gaz de combustion est globalement d'un bord à l'autre du four. Les modulations de la direction de la flamme se font dans un plan vertical. Les jets gazeux convergents sont réglés de préférence de telle sorte que la flamme se développe à peu près parallèlement à la surface du bain de verre en fusion pour assurer le meilleur transfert thermique.

Le brûleur selon l'invention peut ne fonctionner qu'avec un des injecteurs de combustible gazeux en fonction des conditions de marche choisies.

La figure 7 représente une des bagues 20, 21 des injecteurs de combustible gazeux. Les bagues sont interchangeables et offrent une possibilité complémentaire de réglage des jets gazeux en débit, orientation ou même sur le mode d'épanouissement du flux gazeux. La figure 7 montre ainsi des parois internes inclinées par rapport à l'axe des parois externes A-A. De la même façon la section interne de cette bague peut offrir une forme oblongue conduisant à un effet d'étalement limité du flux gazeux dans la dimension la plus large de cette ouverture.

La coupe transversale de la figure 6 se situe au niveau des canalisations de l'eau de refroidissement 17 et 18. Cette coupe montre la disposition respective des différentes canalisations dans l'enveloppe 10 du brûleur. Des parois 22, 23 séparent le brûleur en deux moitiés. Ces parois s'interrompent à l'extrémité du brûleur pour permettre le passage en 24 de l'eau d'une moitié à l'autre. Cette disposition force la circulation de l'eau sur toute la longueur du brûleur assurant ainsi un refroidissement de l'ensemble.

Le brûleur présenté offre ainsi diverses manières de fonctionnement. Il est possible de passer d'un mode de combustion à un autre sans devoir changer de brûleur. Il est possible aussi de fonctionner de façon simultanée avec des combustibles liquides et gazeux pour tirer le meilleur parti des caractéristiques de combustion de ces deux combustibles.

Le fonctionnement décrit, comprend l'utilisation d'air chaud. Il est connu également d'utiliser un enrichissement en oxygène pour accroître notamment l'énergie disponible sur chaque brûleur. Des enrichissements en oxygène, en particulier appliqués au niveau du brûleur, se font à des teneurs qui ne sont pas ordinairement supérieurs à un total de 50% d'oxygène dans le flux gazeux, et le plus souvent qui ne dépasse pas 35%.

## Revendications

1. Four de fusion du verre (1) comprenant des brûleurs (9) et des régénérateurs (6) situés de part et d'autre du four, les régénérateurs s'ouvrant sur le four par des gaines (8) dans lesquelles les brûleurs (9) sont disposés («through port») à proximité du débouché (5) de ces gaines dans l'enceinte du four, four dans lequel alternativement les brûleurs d'un seul côté du four sont actifs et sont dans le courant d'air préchauffé par passage dans le régénérateur correspondant, les fumées de combustion émises à partir des brûleurs actifs passant par les gaines dans les régénérateurs situés sur le côté opposé, les brûleurs étant rétractés hors de la gaine lorsqu'ils ne sont pas actifs, la température du brûleur étant contrôlée par circulation de fluide de refroidissement (17, 18), chaque brûleur comprenant dans un même ensemble une alimentation de combustible liquide et une alimentation de combustible gazeux, l'injection de combustible gazeux étant en deux parties (11, 12) disposées de part et d'autre de l'alimentation par injection (13) du combustible liquide, les deux alimentations pouvant fonctionner séparément ou simultanément,

2. Four selon la revendication 1 dans lequel dans le brûleur (9) les injections des deux parties d'alimentation en combustible gazeux (11, 12) sont alignées dans un plan vertical avec l'injecteur de combustible liquide (13).

3. Four selon la revendication 2 dans lequel dans le brûleur (9) les injecteurs des alimentations en combustible gazeux (11, 12) sont d'axes orientés de façon convergente avec l'axe de l'injection du combustible liquide (13).

4. Four selon l'une des revendications 2 ou 3, dans lequel dans le brûleur (9) un au moins des injecteurs de combustible gazeux (11, 12) est d'ouverture oblongue dans une direction horizontale.

5. Four selon l'une des revendications 3 ou 4 dans lequel les flux de combustibles gazeux des brûleurs (9) sont réglés en direction et débit de manière à développer une flamme qui s'étend dans un plan sensiblement horizontal.

6. Four selon la revendication 1 dans lequel les brûleurs (9) placés dans le courant d'air préchauffé présentent une paroi externe (10) dont le profil est choisi pour limier les turbulences de cet air.

7. Four selon la revendication 6 dans lequel les injecteurs (11,12,13) d'alimentation en combustible des brûleurs (9) sont situés sur la partie de la paroi (10) du brûleur tournée vers l'aval du flux d'air chaud,

8. Four selon la revendication 7 dans lequel au moins l'injection du combustible liquide (13) est faite à partir d'un renfoncement aménagé dans la paroi externe (10) du brûleur (9).

9. Four selon l'une des revendications précédentes dans lequel le combustible liquide est injecté par le brûleur (9) sans l'aide de fluide de pulvérisation.

10. Four selon l'une des revendications précédentes dans lequel l'alimentation en combustible liquide (13) du brûleur est effectuée par une canalisation (16) au moins en partie isolée de la circulation du fluide de refroidissement (17, 18).

11. Procédé de combustion conduite dans un four de fusion de verre selon l'une des revendications 1 à 10 dans lequel au moins un brûleur est associé à une alimentation en comburant dont la teneur en oxygène est d'au plus 50%.

## Patentansprüche

1. Glasschmelzofen (1), umfassend Brenner (9) und Regeneratoren (6), die sich beiderseits des Ofens befinden, wobei sich die Regeneratoren auf dem Ofen durch Hüllen (8) öffnen, in denen die Brenner (9) in der Nähe der Ausmündung (5) dieser Hüllen in dem Raum des Ofens angeordnet sind ("through port"), wobei in dem Ofen abwechselnd die Brenner auf nur einer Seite des Ofens aktiv sind und im vorgewärmten Luftstrom durch Durchgang durch den entsprechenden Regenerator angeordnet sind, wobei die Verbrennungsgase, die von den aktiven Brennern abgegeben werden, durch die Hüllen in den auf der gegenüberliegenden Seite angeordneten Regeneratoren strömen, wobei die Brenner aus der Hülle herausgezogen werden, wenn sie nicht aktiv sind, wobei die Temperatur des Brenners durch Zirkulation eines Kühlfluids (17, 18) kontrolliert wird, wobei jeder Brenner in einer selben Einheit eine Versorgung mit flüssigem Brennstoff und eine Versorgung mit gasförmigem Brennstoff umfasst, wobei das Einspritzen von gasförmigem Brennstoff in zwei Teilen (11, 12) erfolgt, die beiderseits der Versorgung durch Einspritzen (13) des flüssigen Brennstoffes angeordnet sind, wobei die beiden Versorgungen getrennt oder gleichzeitig funktionieren können.

2. Ofen nach Anspruch 1, bei dem im Brenner (9) die Einspritzungen der beiden Teile zur Versorgung mit gasförmigem Brennstoff (11, 12) in einer vertikalen Ebene mit der Einspritzung von flüssigem Brennstoff (13) ausgerichtet sind.

3. Ofen nach Anspruch 2, bei dem im Brenner (9) die Einspritzungen der Versorgungen mit gasförmigem Brennstoff (11, 12) Achsen aufweisen, die konvergierend mit der Achse der Einspritzung des flüssigen Brennstoffes (13) ausgerichtet sind.

4. Ofen nach einem der Ansprüche 2 oder 3, bei dem der Brenner (9) mindestens einer der Einspritzungen von gasförmigem Brennstoff (11, 12) eine längliche Öffnung in einer horizontalen Richtung aufweist.

5. Ofen nach einem der Ansprüche 3 oder 4, bei dem die Ströme von gasförmigen Brennstoffen der Brenner (9) in Richtung und Menge derart reguliert sind, dass sich eine Flamme entwickelt, die sich in einer im Wesentlichen horizontalen Ebene erstreckt.

6. Ofen nach Anspruch 1, bei dem die im vorgewärmten Luftstrom angeordneten Brenner (9) eine Außenwand (10) aufweisen, deren Profil derart gewählt ist, dass die Verwirbelungen dieser Luft begrenzt werden.

7. Ofen nach Anspruch 6, bei dem die Einspritzungen (11, 12, 13) einer Brennstoffversorgung der Brenner (9) auf dem Teil der Wand (10) des Brenners angeordnet sind, der stromabwärts zum Heißluftstrom ausgerichtet ist.

8. Ofen nach Anspruch 7, bei dem mindestens die Einspritzung des flüssigen Brennstoffes (13) aus einer Verstärkung erfolgt, die in der Außenwand (10) des Brenners (9) vorgesehen ist.

9. Ofen nach einem der vorhergehenden Ansprüche, bei dem der flüssige Brennstoff durch den Brenner (9) ohne die Hilfe eines Zerstäubungsfluids eingespritzt wird.

10. Ofen nach einem der vorhergehenden Ansprüche, bei dem die Versorgung mit flüssigem Brennstoff (13) des Brenners durch eine Kanalisation (16) erfolgt, die zumindest teilweise von der Zirkulation des Kühlfluids (17, 18) isoliert ist.

11. Verbrennungsverfahren, das in einem Glasschmelzofen nach einem der Ansprüche 1 bis 10 durchgeführt wird, bei dem mindestens ein Brenner einer Versorgung mit Brennstoff zugeordnet ist, dessen Sauerstoffgehalt höchstens 50 % beträgt.

## Claims

1. Glass melting furnace (1) comprising burners (9) and regenerators (6) situated on each side of the furnace, the regenerators opening onto the furnace via ducts (8) in which the burners (9) are arranged (through port) near the mouth (5) of these ducts in the furnace surroundings, in which furnace the burners on just one side of the furnace are active alternately and are in the stream of air preheated by passing through the corresponding regenerator, the combustion flue gases emitted from the active burners passing through the ducts into the regenerators situated on the opposite side, the burners being retracted out of the duct when they are not active, the temperature of the burner being controlled by circulation of cooling fluid (17, 18), each burner comprising within one and the same assembly a liquid fuel supply and a gaseous fuel supply, the injection of gaseous fuel being performed in two parts (11, 12) arranged one on each side of the liquid fuel injection supply (13), the two supplies being able to operate separately or simultaneously.

2. Furnace according to Claim 1, in which, in the burner (9), the injections of the two parts of the gaseous fuel supply (11, 12) are aligned in a vertical plane with the liquid fuel injector (13).

3. Furnace according to Claim 2, in which, in the burner (9), the injectors of the gaseous fuel supplies (11, 12) have axes oriented so that they converge with the axis of the injection of the liquid fuel (13).

4. Furnace according to one of Claims 2 and 3, in which, in the burner (9), at least one of the gaseous fuel injectors (11, 12) has an opening that is oblong in a horizontal direction.

5. Furnace according to one of Claims 3 and 4, in which the streams of gaseous fuels of the burners (9) are regulated in terms of direction and in terms of delivery so as to develop a flame that extends in a substantially horizontal plane.

6. Furnace according to Claim 1, in which the burners (9) placed in the stream of preheated air have an external wall (10) the profile of which is chosen to limit the turbulence of this air.

7. Furnace according to Claim 6, in which the fuel supply injectors (11, 12, 13) of the burners (9) are situated on that part of the wall (10) of the burner that faces in the downstream direction of the hot air stream.

8. Furnace according to Claim 7, in which at least the injection of the liquid fuel (13) is performed from a recess formed in the external wall (10) of the burner (9).

9. Furnace according to one of the preceding claims, in which the liquid fuel is injected by the burner (9) without the aid of an atomization fluid.

10. Furnace according to one of the preceding claims, in which the supply of liquid fuel (13) to the burner is performed by a pipe (16) that is at least partially insulated from the circulation of the cooling fluid (17, 18).

11. Method of combustion conducted in a glass melting furnace according to one of Claims 1 to 10, in which at least one burner is associated with an oxidant supply the oxygen content of which is at most 50%.
